# EUROPÄISCHE PATENTSCHRIFT

(11) **EP 2 982 531 B1**
(45) Veröffentlichungstag und Bekanntmachung des Hinweises auf die Patenterteilung: **06.03.2019**
(21) Anmeldenummer: 15002230.9
(22) Anmeldetag: 28.07.2015
(51) Int. Cl.: B60J 10/00

(54) **ECKAUSBILDUNG EINER HOHLKAMMERDICHTUNG**
CORNER OF A HOLLOW CHAMBER SEAL
FAÇONNAGE DES ANGLES D'UN JOINT CREUX

(30) Priorität: 06.08.2014 DE 102014111215
(43) Veröffentlichungstag der Anmeldung: 10.02.2016
(73) Patentinhaber: Jäger Automobil-Technik GmbH, 37520 Osterode am Harz (DE)
(72) Erfinder: Ranzau, Heiko, 29664 Walsrode (DE)
(74) Vertreter: Seewald, Jürgen

(56) Entgegenhaltungen:
- DE-A1- 10 046 975
- DE-A1-102004 020 799
- DE-U1- 29 923 157
- FR-A1- 2 642 809
- US-A1- 2002 058 124
- US-A1- 2004 216 384

## Beschreibung

Die vorliegende Erfindung betrifft eine Eckausbildung einer Hohlkammerdichtung gemäß dem Oberbegriff des Anspruchs 1.

Der Eckbereich einer Hohlkammerdichtung ist eine Problemzone, da sich die Hohlkammerdichtung bei der Montage in diesem Bereich unter Veränderung ihres Querschnitts deformiert. Dies hat funktionelle und ästhetische Nachteile, die aber durch geeignete Maßnahmen vermieden werden können.

In der DE 10 2004 020 799 A1 wird eine Hohlprofildichtung, vorzugsweise für die Beschickungsöffnung eines Backofens oder Herdes beschrieben, die umlaufend am Rand der Beschickungsöffnung befestigt wird, wobei in den Eck- oder Krümmungs-abschnitten Versteifungselemente in dem Hohlprofil angebracht werden, und die von den Endabschnitten der um die Beschickungsöffnung umlaufenden Hohlprofil-dichtung gebildete Stoßstelle so gewählt wird, dass ein Versteifungselement die Stoßstelle überbrückt und die benachbarten Endabschnitte verbindet.

Aus der DE 100 46 975 A1 ist ein elastisches Hohlprofil mit wenigstens einer Hohlkammer und wenigstens einer Eckkrümmung zur bündigen Verlegung entlang eines Eckbereiches eines Fahrzeugausschnittes für ein bewegliches Schließteil bekannt, wobei die Hohlkammer zur Aufnahme einer Sensoreinrichtung dient und die Aufgabe gelöst werden soll, eine Funktion der Sensoreinrichtung im Bereich von Eckkrümmungen mit möglichst kleinem Krümmungsradius zu ermöglichen. Zu diesem Zweck wird das Hohlprofil im Eckbereich bis zur Hohlkammer hin ausgespart und der ausgesparte Ausschnitt durch eine separat hergestellte Eckeinheit ausgefüllt, die auf den Krümmungswinkel des Eckbereichs abgestimmt ist. Hierdurch wird erreicht, dass Spannungen, die durch die Krümmung des elastischen Hohlprofils verursacht werden, herabgesetzt werden, und auch im Bereich der Eckkrümmung der Querschnitt der Hohlkammer gegenüber den geradlinigen Bereichen gleich bleibt.

Gemäß FR 2 642 809 ist eine Eckausbildung für eine Hohlkammerdichtung vorgesehen, bei der ein Dichtungselement zumindest teilweise in dem Hohlraum der Hohlkammerdichtung angeordnet ist. Das Dichtungselement ragt mit einem als Kopf dienenden inneren Abschnitt in den Hohlraum und ist mit einem als Fuß dienenden äußeren Abschnitt bauteilfest verbunden, so dass ein sicheres Halten des Dichtungselementes gewährleistet ist. Der innere Abschnitt liegt an einer dem Bauteil zugewandten Wandung der Hohlkammerdichtung an, so dass die Hohlkammerdichtung in diesem Bereich verstärkt wird. Über einen Schlitz ist der innere Abschnitt mit dem äußeren Abschnitt verbunden, so dass der innere Abschnitt an die dem Bauteil zugewandten Wandung gezogen wird und über die bauteilfeste Befestigung des äußeren Abschnittes an dieser gehalten wird.

Eine gattungsgemäße Eckausbildung ist aus der DE 299 23 157 U1 bekannt. Es handelt sich hier um eine an einem Fahrzeug-Schiebedach angebrachte Hohlkammerdichtung. Das Schiebedach muss gegenüber dem Fahrzeugdach im geschlossenen Zustand abgedichtet sein. Dazu ist am Rand des Schiebedachs eine mehrteilige Hohlkammerdichtung befestigt. Diese Hohlkammerdichtung setzt sich aus einem um eine Ecke gebogen verlaufenden Dichtungsteil und einem sich über eine Stoßnaht an dieses anschließenden weiteren Dichtungsteil zusammen. In diese beiden Dichtungsteile ist ein die Stoßnaht durchsetzender Verbindungsschlauch eingesetzt, der sich über die gesamte Biegung des um die Ecke verlaufenden Dichtungsteils erstreckt. Dieser Verbindungsschlauch nimmt als Füllstück die bei der Montage im Eckbereich der Hohlkammerdichtung wirkenden Deformationskräfte auf und leitet sie in das Schiebedach ab. Dadurch bleibt der ursprüngliche Querschnitt der Hohlkammerdichtung im Eckbereich im Wesentlichen erhalten, wodurch Windgeräusche vermieden werden und eine zuverlässige Dichtungsfunktion auch in diesem Bereich sichergestellt ist.

Nachteilig an dieser aus dem Stand der Technik bekannten Lösung ist dass die oben genannten Vorteile nach längerem Gebrauch häufig nicht mehr vorhanden sind, da der Verbindungsschlauch in der Hohlkammerdichtung wandert und dadurch seine Stützwirkung aufgehoben ist. Des Weiteren ist das Einbringen des Verbindungsschlauches in die Hohlkammerdichtung sehr aufwändig. Ein weiterer Nachteil ist darin zu sehen, dass an der Verbindungsstelle zwischen den beiden Dichtungsteilen eine die Ästhetik störende Stoßnaht sichtbar ist.

Aufgabe der vorliegenden Erfindung ist es, eine Eckausbildung gattungsgemäßer Art zur Verfügung zu stellen, die eine Deformation einer Hohlkammerdichtung auch nach längerem Gebrauch zuverlässig verhindert, einfach herzustellen ist, und auch ästhetische Belange erfüllt.

Diese Aufgabe wird erfindungsgemäß mit einer Eckausbildung gelöst, die die Merkmale des Anspruchs 1 aufweist.

Die Montage einer erfindungsgemäßen Eckausbildung gestaltet sich sehr einfach. Dazu werden in eine für den Einsatzfall abgelängte Hohlkammerdichtung in den Bereichen, in denen nach der Montage die Ecken ausgebildet sind, Schlitze in die Hohlkammerdichtung eingebracht, durch die hindurch die Köpfe der Füllstücke in die Hohlkammerdichtung eingesteckt werden. Die derart vormontierten Hohlkammerdichtungsabschnitte brauchen dann am Einsatzort nur noch um das abzudichtende Bauteil herumgelegt zu werden, wobei die Füllstücke in den Eckbereichen angeordnet sind. Beim Montieren der Hohlkammerdichtung deformieren sich die Köpfe der Füllstücke und stützen gleichzeitig die Wandung der Hohlkammerdichtung ab, wobei die Stützkräfte über den Fuß der Füllstücke in das Bauteil abgeleitet werden. Es versteht sich, dass das Härteverhältnis zwischen den elastomeren Material der Köpfe und dem elastomeren Material der Hohlkammerdichtung so aufeinander abgestimmt sind, dass sich die Köpfe ausreichend deformieren, aber dennoch eine Stützkraft auf die Hohlkammerdichtung ausüben, so dass diese im Eckbereich ihren Querschnitt im Wesentlichen beibehält.

Neben einer einfachen Montage ist die erfindungsgemäße Lösung auch kostengünstig, da nur geringe Werkzeugkosten anfallen. Die Füllstücke sind kostengünstig als Spritzgussteile herstellbar. Durch die Stützwirkung der Füllstücke im Eckbereich bleibt dort die Dichtfunktion der Hohlkammerdichtung im vollen Maße erhalten. Des Weiteren hat die Dichtung auch quer zur Montageebene der Hohlkammerdichtung einen mechanischen Halt. Die erfindungsgemäße Lösung erfüllt auch ästhetische Anforderungen, da sie eine gleichmäßige, durchgängige Optik bietet.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: einen perspektivischen Blick auf ein Bauteil, eine daran anzubringende Hohlkammerdichtung und ein Füllstück vor der Montage,
- Fig. 2: eine Vorderansicht des Füllstückes gemäß Fig. 1 im vergrößerten Maßstab,
- Fig. 3: eine Seitenansicht des Füllstückes, und
- Fig. 4: eine Darstellung gemäß Fig. 1 bei montierter Hohlkammerdichtung, wobei die Hohlkammerdichtung transparent dargestellt ist.

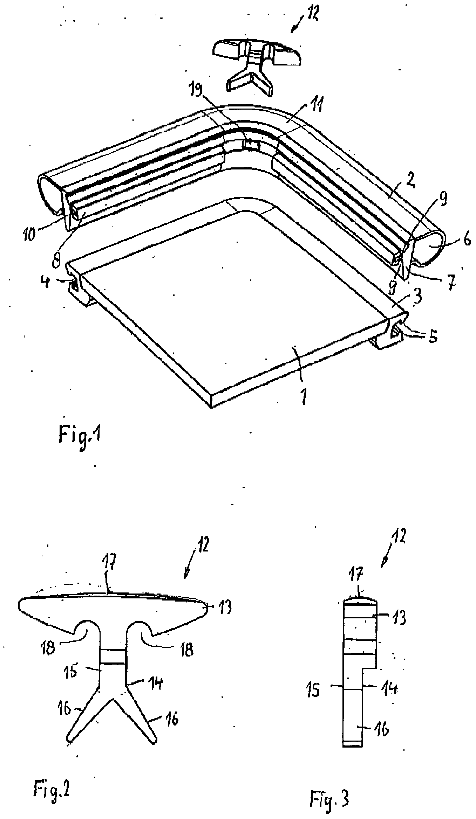

Fig. 1 zeigt ein Paneel 1, bei dem es sich beispielsweise um ein Autoschiebedach handeln kann. An den Randbereich des Paneels 1 soll eine Hohlkammerdichtung 2 angebracht werden, die das Paneel 1 gegen ein anderes Bauteil, z. B. ein Autodach, abdichten soll. Das Paneel 1 ist mit einem Kunststoffrahmen 3 umspritzt, der mit einer umlaufenden Aufnahmenut 4 versehen ist. Die Aufnahmenut 4 besitzt in ihrem Eingangsbereich zwei sich gegenüberliegende Hinterschneidungen 5.

Die Hohlkammerdichtung 2 ist aus einem Elastomer, z. B. Gummi, gefertigt. Sie besitzt einen über ihre gesamte Länge durchgehenden Hohlraum 6. Von der montageseitigen Innenseite des Hohlraums 6 ragt eine Dichtlippe 7 nach unten, die auf ihrer Innenseite mit einer senkrecht abragenden Steckleiste 8 versehen ist. Die Steckleiste 8 weist an ihrem Übergang zur Dichtlippe 7 zwei sich gegenüberliegende Hinterschneidungen 9 auf, die komplementär zu den Hinterschneidungen 5 der Aufnahmenut 4 ausgebildet sind. Des Weiteren ist die Steckleiste 8 mit einem über ihre gesamte Länge durchlaufenden Hohlraum 10 ausgestattet.

Zur Montage der Hohlkammerdichtung 2 am Paneel 1 wird die Steckleiste 8 in die Aufnahmenut 4 des Paneel 1 eingesteckt. Dabei wirken die Hinterschneidungen 5 des Kunststoffrahmens 3 und die Hinterschneidungen 9 der Steckleiste 8 so zusammen, dass die Hohlkammerdichtung 2 problemlos in die Aufnahmenut 4 eingesteckt werden kann und in dieser Position fest am Paneel 1 gehalten wird. Beim Einstecken der Steckleiste 8 in die Aufnahmenut 4 bewirkt der Hohlraum 10 eine vorübergehende Komprimierung der Steckleiste 8, die das Einstecken der Steckleiste 8 in die Aufnahmenut 4 erleichtert.

Ohne weitere Vorkehrungen würde sich die Hohlkammerdichtung 2 im Eckbereich 11 stark im Querschnitt ändern, so dass sich die Dichtfunktion in diesem Bereich verschlechtern würde oder sogar nicht mehr vorhanden wäre.

Zur Vermeidung dieser Nachteile ist im Eckbereich 11 der Hohlkammerdichtung 2 ein Füllstück 12 vorgesehen. Das Füllstück 12 ist als Spritzgussteil mit einem Kopf 13 und einem Fuß 14 hergestellt. Der Kopf 13 besteht aus einem elastomeren Material, während der Fuß 14 aus einem biegesteifen Kunststoffmaterial besteht. Der Fuß 14 besitzt an seinem freien Ende zwei Schenkel 16, die zwischen sich einen rechten Winkel einschließen. Den Schenkeln 16 schließt sich ein Schaft 15 an, der in den T-förmig gestalteten Kopf 13 übergeht, der an seiner Oberseite eine Schulter 17 zur Anlage an die Innenwandung der Hohlkammerdichtung 2 aufweist. Am Übergang des Schaftes 15 zum Kopf 13 sind Freischnitte 18 vorgesehen, die dazu dienen, bei der Montage eine zwängungsfreie Verformung des Kopfes 13 zu ermöglichen. Der Fuß 14 des Füllstückes 12 ist nicht so breit ausgebildet wie der Kopf 13, wie am besten aus Fig. 3 hervorgeht. Dieser Breitenunterschied ist erforderlich, um zum einen eine genügend breite Schulter 16 zur Verfügung zu stellen und andererseits dafür zu sorgen, dass der Fuß 14 bei der Montage in die Aufnahmenut 4 des Rahmens 3 eingesteckt werden kann.

Um das Füllstück 12 montieren zu können, wird die Steckleiste 8 in diesem Bereich weggeschnitten. Des Weiteren wird an die Innenseite der Hohlkammerdichtung 2 ein Schlitz 19 eingebracht, um einen Zugang in den Hohlraum 6 der Hohlkammerdichtung 2 zu schaffen.

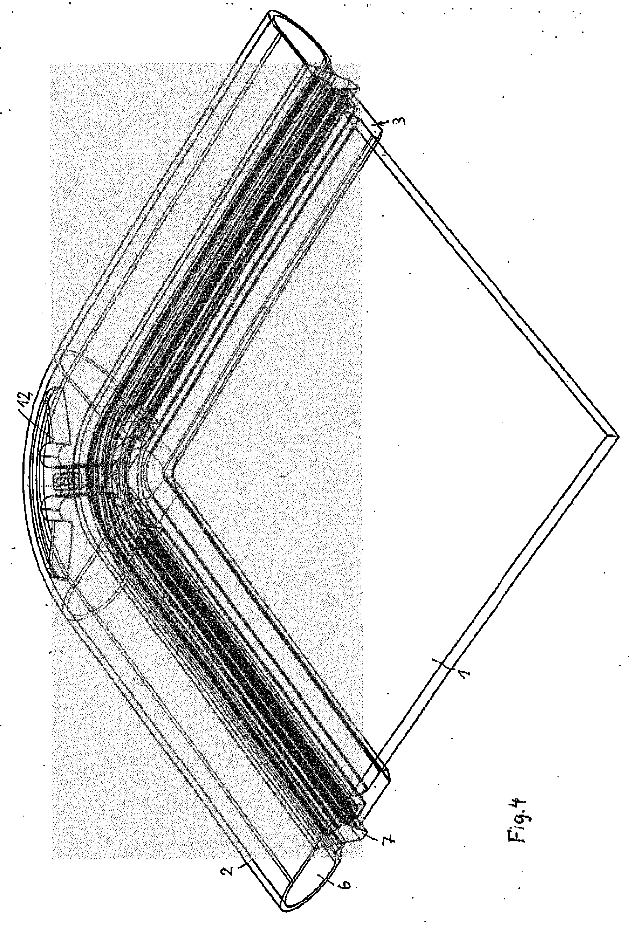

Das Füllstück 12 wird vor der Montage der Hohlkammerdichtung 2 am Paneel 1 durch den Schlitz 19 hindurch gesteckt, so dass der Kopf 12 im Hohlraum 6 angeordnet ist, während der Fuß 14 auf der Innenseite aus der Hohlkammerdichtung 2 herausragt. Im montierten Zustand liegt die Schulter 16 des Kopfes 13 unter entsprechender Verformung des Kopfes 13 an der Innenwandung der Hohlkammerdichtung 2 an und stützt diese ab. Die Stützkraft wird über den Fuß 14 an den Rahmen 3 abgeleitet, wobei die Schenkel 17 des Fußes 14 beidseitig an der Ecke des Rahmens 3 anliegen. In Fig. 4 ist der montierte Zustand des Füllstücks 12 dargestellt.

## Patentansprüche

1. Eckausbildung einer Hohlkammerdichtung (2), wobei im Eckbereich der Hohlkammerdichtung (2) ein Füllstück (12) angeordnet ist, welches die Hohlkammerdichtung (2) unter Deformation stützt und die Stützkräfte in ein Bauteil (1) ableitet, an dem die Hohlkammerdichtung (2) angeordnet ist, **dadurch gekennzeichnet, dass** das Füllstück (12) einen (14) Fuß besitzt, an den sich T-förmig ein Kopf (13) aus einem elastomeren Material anschließt, wobei der Kopf (13) des Füllstücks (12) im montierten Zustand durch einen in die Hohlkammerdichtung (2) eingebrachten Schlitz (19) in die Hohlkammerdichtung (2) hineinragt und sich an der dem Bauteil (1) gegenüberliegenden Innenwandung der Hohlkammerdichtung (2) unter Deformation abstützt, und der Fuß (14) sich am Bauteil (1) abstützt und die Stützkräfte des Kopfes (13) in das Bauteil (1) ableitet.

2. Eckausbildung nach Anspruch 1, **dadurch gekennzeichnet, dass** am Fuß (14) des Füllstückes (12) zwei Schenkel (16) zur beidseitigen Anlage an eine Ecke des abzudichtenden Bauteils (1) vorgesehen sind.

3. Eckausbildung nach Anspruch 1 oder Anspruch 2, **dadurch gekennzeichnet, dass** der Fuß (14) über einen Schaft (15) in den Kopf (13) übergeht und am Übergang des Schaftes (15) zum Kopf (13) Freischnitte (18) vorgesehen sind.

4. Eckausbildung nach einem der vorstehenden Ansprüche, **dadurch gekennzeichnet, dass** das Füllstück (12) als Spritzgussteil hergestellt ist.

## Claims

1. Corner structure of a hollow chamber seal (2), a filling piece (12) being arranged in the corner region of the hollow chamber seal (2), which piece supports the hollow chamber seal (2) under deformation and diverts the supporting forces into a component (1) on which the hollow chamber seal (2) is arranged, **characterised in that** the filling piece (12) has a foot (14), to which a head (13) made of an elastomer material is attached, the head (13) of the filling piece (12) protruding into the hollow chamber seal (2) through a slot (19) made in the hollow chamber seal (2) in the mounted state and being supported on the inner wall of the hollow chamber seal (2) which is opposite the component (1) under deformation, and the foot (14) being supported on the component (1) and diverting the supporting forces of the head (13) into the component (1).

2. Corner structure according to Claim 1, **characterised in that,** on the foot (14) of the filling piece (12), two branches (16) for installation on both sides are provided on a corner of the component (1) to be sealed.

3. Corner structure according to either Claim 1 or 2, **characterised in that** the foot (14) transitions into the head (13) via a shaft (15), and cut-outs (18) are provided on the transition of the shaft (15) to the head (13).

4. Corner structure according to any one of the preceding claims, **characterised in that** the filling piece (12) is produced as an injection-moulded part.

## Revendications

1. Agencement d'étanchéité formant un angle d'un joint à chambre creuse (2), dont une pièce de remplissage (12) étayant le joint à chambre creuse (2) sous déformation et transmettant les forces d'étaiement à un composant (1), sur lequel est disposé le joint à chambre creuse (2), est positionnée dans la zone d'angle du joint à chambre creuse (2), **caractérisé en ce que** la pièce de remplissage (12) présente un pied, auquel se raccorde, de façon à former un T, une tête (13) en un matériau élastomère, la tête (13) de la pièce de remplissage (12) faisant saillie, en état monté, dans le joint à chambre creuse (2), à travers une fente (19) pratiquée dans celui-ci et s'appuyant sous déformation sur la paroi interne, opposée au composant (1), du joint à chambre creuse (2), et **en ce que** le pied (14) s'appuie sur le composant (1) et transmet les forces d'appui de la tête (13) au composant (1).

2. Agencement d'étanchéité formant un angle suivant la revendication 1, **caractérisé en ce que** deux branches (16), qui sont destinées à s'appuyer contre un angle du composant (1) à étancher, sont prévues sur le pied (14) de la pièce de remplissage (12).

3. Agencement d'étanchéité formant un angle suivant la revendication 1 ou 2, **caractérisé en ce que** le pied (14) se raccorde via une tige (15) à la tête (13) et **en ce que** des découpes (18) sont prévues au niveau de la transition de la tige (15) vers la tête (13).

4. Agencement d'étanchéité formant un angle suivant une des revendications précédentes, **caractérisé en ce que** la pièce de remplissage (12) et fabriquée sous forme de pièce moulée par injection.
